# EUROPÄISCHE PATENTSCHRIFT

(11) **EP 3 872 008 B1**
(45) Veröffentlichungstag und Bekanntmachung des Hinweises auf die Patenterteilung: **30.11.2022**
(21) Anmeldenummer: 21158954.4
(22) Anmeldetag: 24.02.2021
(51) Int. Cl.: B65G 1/04, B66F 9/07, B66F 9/08

(54) **MASTANORDNUNG FÜR EIN REGALBEDIENGERÄT**
MAST ASSEMBLY FOR A SHELF-SERVICE DEVICE
AGENCEMENT DE MÂT POUR UN TRANSTOCKEUR

(30) Priorität: 26.02.2020 DE 102020202438
(43) Veröffentlichungstag der Anmeldung: 01.09.2021
(73) Patentinhaber: MIAS Maschinenbau, Industrieanlagen & Service GmbH, 85386 Eching (DE)
(72) Erfinder: HOHNHORST, Antonio, 82140 Olching, DE (DE); HOOLE, Martin, 80796 München (DE); MOTILVA, Manuel, 82110 Germering (DE)
(74) Vertreter: Herzog, Markus

(56) Entgegenhaltungen:
- EP-A1- 2 615 056
- WO-A1-2010/118445
- DE-A1- 19 631 511
- JP-A- H0 940 120
- JP-A- 2006 189 088
- JP-A- 2009 190 855
- JP-A- 2016 050 109

## Beschreibung

Die vorliegende Erfindung betrifft eine Mastanordnung für ein Regalbediengerät, umfassend einen durch ein vorderes Gurtblech, zwei Seitenbleche und ein hinteres Gurtblech gebildeten Mast mit einem Kastenprofil und einem im Wesentlichen rechteckigen Querschnitt, eine Mehrzahl von jeweils paarweise an den Seitenblechen und/oder dem vorderen Gurtblech befestigten Schnittstellenelementen, welche sich im Bereich des vorderen Gurtblechs erstrecken, und eine Schiene zum Führen des Regalbediengeräts, wobei die Schiene jeweils an den Schnittstellenelementen angebracht ist.

Derartige gattungsgemäße Mastanordnungen sind aus dem Stand der Technik bekannt. Das Dokument EP 2 615 056 A1 offenbart zum Beispiel eine Mastanordnung mit den Merkmalen des Oberbegriffs des Anspruchs 1.

Damit sie ausreichend stabil und steif sind, um den durch das daran fahrende Regalbediengerät hervorgerufenen Momenten widerstehen zu können, werden hierbei in bekannten Ausführungen gegenwärtig in regelmäßigen Abständen Schottbleche im Inneren des Hohlprofils des Masts platziert, um ein Einbeulen der langen Gurtbleche unter lokal hohen Beanspruchungen an der momentanen Position des Hubwagens zu verhindern.

Das Befestigen dieser Schottbleche innerhalb des Masts gestaltet sich jedoch sehr aufwendig, da mindestens eine Kante davon geschweißt werden muss, nachdem das Kastenprofil des Masts komplett geschlossen worden ist. Daher müssen an entsprechenden Positionen Öffnungen in den Seitenblechen des Masts vorgesehen werden, damit der Schweißer die vorgesehene Nahtposition überhaupt erreichen kann. Jedoch ist auch das Schweißen durch diese Öffnungen hindurch aufgrund des eingeengten Arbeitsraums sehr aufwendig und erfordert eine hohe Geschicklichkeit vom Schweißer, sodass diese Tätigkeit gar nicht oder nur sehr schwerlich automatisierbar ist. Außerdem kann die Schweißnaht durch die derart festgelegte Ansatzstelle eine ungünstige Kerbwirkung aufweisen.

Es ist somit die Aufgabe der vorliegenden Erfindung, eine Mastanordnung für ein Regalbediengerät vom oben beschriebenen gattungsgemäßen Typ derart weiterzubilden, dass sie einfacher als die heutige Ausführung herstellbar und insbesondere für den Einsatz eines Schweißroboters geeignet ist, während gleichzeitig eine wenigstens gleich hohe Stabilität und Steifigkeit bei verringerten Kosten erzielt wird.

Zur Lösung dieser Aufgabe sind in der erfindungsgemäßen Mastanordnung die Schnittstellenelemente von wenigstens einem Paar der Schnittstellenelemente jeweils mit einer Durchbrechung versehen, durch welche und durch entsprechende Durchbrechungen in dem Seitenblech hindurch sich ein Verstärkungselement erstreckt, welches an beiden Seiten mit den jeweiligen Schnittstellenelementen verbunden ist.

Es zeigt sich, dass durch das derartige Vorsehen von wenigstens einem Verstärkungselement im Bereich der Schnittstellelemente, d. h. in geringen Abständen in der Nähe des vorderen Gurtblechs, eine ausreichende lokale Versteifung und Verstärkung des Masts erzielt werden kann, sodass wenn überhaupt nur noch ein Minimum an Schottblechen benötigt wird.

Indem die Schnittstellenelemente von außen durch die Durchbrechungen, welche insbesondere durch Bohrungen gebildet sein können, eingesteckt werden können, sind sie ferner von außen her gut zugänglich und die Verbindung davon mit den jeweiligen Schnittstellenelementen kann in einer vereinfachten Weise vorgenommen werden. Hierbei sind die Schnittstellenelemente im Wesentlichen als Klötze ausgebildet und die Anbringung der Schiene an wenigstens einem Teil dieser Schnittstellenelemente kann durch eine Verschraubung oder mittels Schließringbolzen erfolgen.

Alternativ oder zusätzlich kann die Befestigung von wenigstens einem Teil der Schnittstellenelemente an den Seitenblechen und/oder einem Teil der Verstärkungselemente an den Schnittstellenelementen durch ein Verschweißen erfolgen, insbesondere durch ein Kehlnahtschweißen.

Während es prinzipiell denkbar ist, die Paare von Schnittstellenelementen auf verschiedenste Weise anzuordnen, beispielsweise erneut paarweise mit einem relativ geringen Abstand entlang der Längsrichtung des Mastes, gefolgt von einem größeren Abstand zum darauffolgenden Paar von Schnittstellenelementen, so können in einer besonders einfachen Ausführungsform die Paare von Schnittstellenelementen in im Wesentlichen regelmäßigen Abständen entlang des Mastes angeordnet sein.

Weiterhin kann wenigstens eines der Verstärkungselemente durch ein rohrförmiges Element gebildet sein, insbesondere durch ein Hohlrohr. Selbstverständlich sind jedoch auch andere geometrische Formen von Verstärkungselementen möglich, beispielsweise gekantete Bleche oder Ähnliches, wobei jedoch insbesondere bei Hohlrohren mit einem kreisförmigen Querschnitt eine optimale Versteifungswirkung des Masts bei minimalem Materialaufwand erzielt werden kann.

Um eine geeignete Verbindung der Verstärkungselemente mit den Schnittstellenelementen und insbesondere das oben angesprochene Schweißen zu ermöglichen, kann die Länge von wenigstens einem der Verstärkungselemente zwischen 1% und 10% größer sein als der Abstand der Seitenflächen, sodass das entsprechende Versteifungselement zwar an beiden Seiten für eine Verbindung, beispielsweise ein Schweißen, ausreichend übersteht, jedoch kein zusätzlicher unnötiger Material- oder Platzbedarf geschaffen wird.

Auch im Zusammenhang mit der vorliegenden Erfindung kann die Mastanordnung ferner wenigstens ein Schottblech umfassen, welches sich innerhalb des Kastenprofils des Masts im Wesentlichen senkrecht zu den Gurtblechen und den Seitenblechen erstreckt, beispielsweise wenn es sich herausstellt, dass hierdurch eine notwendige weitere Versteifung der Mastanordnung herbeigeführt werden muss. In jedem Fall kann die Zahl dieser Schottbleche gegenüber bekannten Mastanordnungen aus dem Stand der Technik jedoch deutlich verringert werden.

Gemäß einem weiteren Aspekt betrifft die vorliegende Erfindung ein Verfahren zum Herstellen einer derartigen Mastanordnung, umfassend die Schritte eines Heftens des hinteren Gurtblechs und der beiden Seitenflächen, eines Einlegens und anschließenden Heftens des vorderen Gurtblechs, der Schnittstellenelemente und der Verstärkungselemente, und eines anschließenden Verschweißens der gehefteten Nähte. Hiernach kann dann die Schiene an den Schnittstellenelementen befestigt werden, beispielsweise daran festgeschraubt.

Wie bereits oben angedeutet, ist dieses Verfahren gegenüber Herstellungsverfahren von Mastanordnungen aus dem Stand der Technik deutlich effizienter mit einem höheren Automatisierungsgrad durchführbar, wobei selbst wenn zwischen dem Heften des hinteren Gurtblechs und der beiden Seitenbleche sowie dem Einlegen und anschließenden Heften des vorderen Gurtblechs, der Schnittstellenelemente und der Verstärkungselemente noch wenigstens ein Schottblech eingeschweißt wird, die entsprechenden Schweißschritte vorteilhafterweise wenigstens teilweise mittels eines Schweißroboters durchgeführt werden können.

Weitere Merkmale und Vorteile der vorliegenden Erfindung werden aus der nachfolgenden Beschreibung einer Ausführungsform deutlich, wenn diese zusammen mit den beiliegenden Figuren betrachtet wird. Diese zeigen im Einzelnen:
- Fig. 1: eine schematische isometrische Ansicht sowie eine Seitenansicht eines erfindungsgemäßen Regalbediengeräts; und
- Fig. 2: einen Querschnitt durch die Mastanordnung aus Figur 1 entlang der Schnittebene B aus Figur 1.

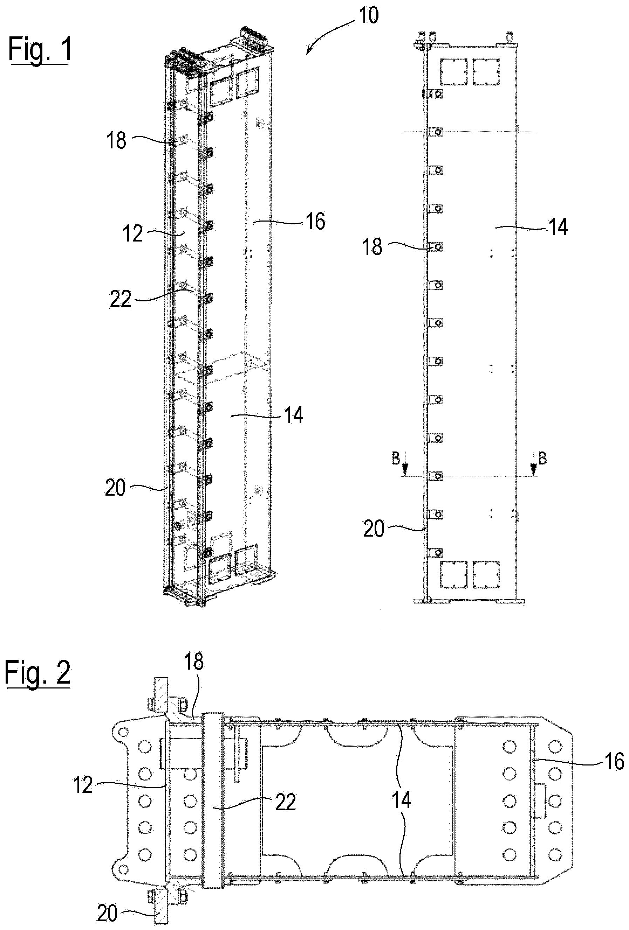

Figur 1 zeigt in zwei unterschiedlichen Ansichten eine erfindungsgemäße Mastanordnung für ein Regalbediengerät, welche ganz allgemein mit dem Bezugszeichen 10 bezeichnet ist. Hierbei ist durch ein vorderes Gurtblech 12, zwei Seitenbleche 14 und ein hinteres Gurtblech 16 ein Mast mit einem Kastenprofil und einem im Wesentlichen rechteckigen Querschnitt gebildet.

Weiterhin sind entlang der Länge des Masts jeweils paarweise gegenüberliegend an den Seitenblechen 14 Schnittstellenelemente 18 befestigt, welche sich im Bereich des vorderen Gurtblechs 12 erstrecken, und an welchen jeweils eine Schiene 20 angebracht ist. Die Schnittstellelemente 18 können beispielsweise als Schmiedeteile ausgebildet sein.

Wie insbesondere aus der Querschnittsansicht aus Figur 2 zu erkennen ist, sind sowohl die Schnittstellenelemente 18 als auch die Seitenbleche 14 an den entsprechenden Stellen mit Durchbrechungen in Form von Bohrungen versehen, durch welche hindurch jeweilige Verstärkungselemente 22 in Form von Hohlrohren mit kreisförmigem Querschnitt eingesetzt sind. Diese Verstärkungselemente 22 dienen zur lokalen Versteifung des Masts, um die Beanspruchungen der Gurtbleche im Bereich der momentanen Hubwagenposition an der Schiene 20 aufnehmen zu können. Durch diese Maßnahme kann die Zahl der innerhalb des Masts notwendigen Schottbleche 24 verringert und somit die Herstellung der Mastanordnung 10 vereinfacht werden. Insbesondere kann die Schiene 20 mittels einer Verschraubung oder durch Schließringbolzen befestigt werden, während die Schnittstellenelemente 18 an den Seitenblechen 14 und die Verstärkungselemente 22 an den Schnittstellenelementen 18 jeweils durch ein Schweißen, beispielsweise ein Kehlnaht-Schweißen, angebracht sein können.

## Patentansprüche

1. Mastanordnung (10) für ein Regalbediengerät, umfassend:
- einen durch ein vorderes Gurtblech (12), zwei Seitenbleche (14) und ein hinteres Gurtblech (16) gebildeten Mast mit einem Kastenprofil und einem im Wesentlichen rechteckigen Querschnitt;
- eine Mehrzahl von jeweils paarweise an den Seitenblechen (14) und/oder an dem vorderen Gurtblech (12) befestigten Schnittstellenelementen (18), welche sich im Bereich des vorderen Gurtblechs (12) erstrecken; und
- eine Schiene (20) zum Führen des Regalbediengeräts, wobei die Schiene (20) jeweils an den Schnittstellenelementen (18) angebracht ist;
**dadurch gekennzeichnet, dass** die Schnittstellenelemente (18) von wenigstens einem Paar der Schnittstellenelemente (18) jeweils mit einer Durchbrechung versehen sind, durch welche und durch entsprechende Durchbrechungen in den Seitenblechen (14) hindurch sich ein Verstärkungselement (22) erstreckt, welches an beiden Seiten mit den jeweiligen Schnittstellelementen (18) verbunden ist.

2. Mastanordnung (10) nach Anspruch 1,
**dadurch gekennzeichnet, dass** die Anbringung der Schiene (20) an wenigstens einem Teil der Schnittstellenelemente (18) durch eine Verschraubung oder mittels Schließringbolzen erfolgt.

3. Mastanordnung (10) nach einem der Ansprüche 1 und 2,
**dadurch gekennzeichnet, dass** die Befestigung von wenigstens einem Teil der Schnittstellenelemente (18) an den Seitenblechen (14) und/oder einem Teil der Verstärkungselemente (22) an den Schnittstellenelementen (18) durch ein Verschweißen erfolgt, insbesondere durch ein Kehlnaht-Schweißen.

4. Mastanordnung (10) nach einem der vorhergehenden Ansprüche,
**dadurch gekennzeichnet, dass** die Paare von Schnittstellenelementen (18) in im Wesentlichen regelmäßigen Abständen entlang des Masts angeordnet sind.

5. Mastanordnung (10) nach einem der vorhergehenden Ansprüche,
**dadurch gekennzeichnet, dass** wenigstens eines der Verstärkungselemente (22) durch ein rohrförmiges Element gebildet ist, insbesondere durch ein Hohlrohr.

6. Mastanordnung (10) nach einem der vorhergehenden Ansprüche, wobei die Länge des Verstärkungselements (22) zwischen 1% und 10% größer ist als der Abstand der Seitenbleche (14).

7. Mastanordnung (10) nach einem der vorhergehenden Ansprüche,
**dadurch gekennzeichnet, dass** sie ferner wenigstens ein Schottblech (24) umfasst, welches sich innerhalb des Kastenprofils des Masts im Wesentlichen senkrecht zu den Gurtblechen (12, 16) und den Seitenblechen (14) erstreckt.

8. Verfahren zum Herstellen einer Mastanordnung (10) nach einem der vorhergehenden Ansprüche, umfassend die Schritte:
a) Heften des hinteren Gurtblechs (16) und der beiden Seitenbleche (14);
b) Einlegen und anschließendes Heften des vorderen Gurtblechs (12), der Schnittstellenelemente (18) und der Verstärkungselemente (22);
c) Verschweißen der gehefteten Nähte.

9. Verfahren nach Anspruch 8, ferner umfassend den Schritt:
d) Einschweißen von wenigstens einem Schottblech (24), wobei dieses Einschweißen zwischen den Schritten a) und b) durchgeführt wird.

10. Verfahren nach Anspruch 8 oder 9, wobei Schritt c) und ggf. Schritt d) mittels eines Schweißroboters durchgeführt wird.

## Claims

1. A mast arrangement (10) for a storage and retrieval unit, comprising:
- a mast, which is formed by a front flange plate (12), two side plates (14) and a rear flange plate (16) and has a box profile and a substantially rectangular cross section;
- a plurality of interface elements (18), which are each secured in pairs to the side plates (14) and/or to the front flange plate (12) and extend in the region of the front flange plate (12); and
- a rail (20) for guiding the storage and retrieval unit, the rail (20) being attached to each of the interface elements (18);
**characterized in that** the interface elements (18) of at least one pair of interface elements (18) are each provided with a hole, a reinforcement element (22) extending through said hole, and through corresponding holes in the side plates (14), and being connected on both sides to the relevant interface elements (18).

2. The mast arrangement (10) according to claim 1,
**characterized in that** the rail (20) is attached to at least some of the interface elements (18) by a screw connection or by means of lockbolts.

3. The mast arrangement (10) according to any of claims 1 and 2,
**characterized in that** the securing of at least some of the interface elements (18) to the side plates (14), and/or the securing of at least some of the reinforcement elements (22) to the interface elements (18), is/are performed by welding, in particular fillet welding.

4. The mast arrangement (10) according to any of the preceding claims,
**characterized in that** the pairs of interface elements (18) are arranged along the mast at substantially regular distances apart.

5. The mast arrangement (10) according to any of the preceding claims,
**characterized in that** at least one of the reinforcement elements (22) is formed by a tubular element, in particular by a hollow tube.

6. The mast arrangement (10) according to any of the preceding claims,
wherein the length of the reinforcement element (22) is between 1% and 10% larger than the distance between the side plates (14).

7. The mast arrangement (10) according to any of the preceding claims,
**characterized in that** it further comprises at least one barrier plate (24), which extends inside the box profile of the mast substantially perpendicularly to the flange plates (12, 16) and the side plates (14).

8. A method for producing a mast arrangement (10) according to any of the preceding claims, comprising the steps of:
a) tack-welding the rear flange plate (16) and the two side plates (14);
b) inserting and subsequently tack-welding the front flange plate (12), the interface elements (18) and the reinforcement elements (22);
c) welding the tack-welded seams.

9. The method according to claim 8, further comprising the step of:
d) welding in at least one barrier plate (24), this welding being carried out between steps a) and b).

10. The method according to either claim 8 or claim 9, wherein step c) and, where applicable, step d) are carried out by means of a welding robot.

## Revendications

1. Ensemble de mât (10) pour un transstockeur, comprenant :
- un mât formé par une tôle de ceinture avant (12), deux tôles latérales (14) et une tôle de ceinture arrière (16), avec un profil en caisson et une section transversale essentiellement rectangulaire ;
- une pluralité d'éléments d'interface (18) fixés par paires aux tôles latérales (14) et/ou à la tôle de ceinture avant (12), qui s'étendent dans la zone de la tôle de ceinture avant (12) ; et
- un rail (20) pour guider le transstockeur, le rail (20) étant fixé respectivement aux éléments d'interface (18) ;
**caractérisé en ce que** les éléments d'interface (18) d'au moins une paire des éléments d'interface (18) sont chacun pourvus d'une ouverture à travers laquelle et à travers des ouvertures correspondantes dans les tôles latérales (14) s'étend un élément de renforcement (22) qui est relié des deux côtés aux éléments d'interface respectifs (18).

2. Ensemble de mât (10) selon la revendication 1,
**caractérisé en ce que** la fixation du rail (20) à au moins une partie des éléments d'interface (18) est réalisée par vissage ou au moyen de boulons à bague de verrouillage.

3. Ensemble de mât (10) selon l'une des revendications 1 et 2,
**caractérisé en ce que** la fixation d'au moins une partie des éléments d'interface (18) sur les tôles latérales (14) et/ou d'une partie des éléments de renforcement (22) sur les éléments d'interface (18) est réalisée par soudage, notamment par soudage d'angle.

4. Ensemble de mât (10) selon l'une des revendications précédentes,
**caractérisé en ce que** les paires d'éléments d'interface (18) sont disposées à intervalles sensiblement réguliers le long du mât.

5. Ensemble de mât (10) selon l'une des revendications précédentes,
**caractérisé en ce qu'**au moins l'un des éléments de renforcement (22) est formé par un élément tubulaire, notamment par un tube creux.

6. Ensemble de mât (10) selon l'une des revendications précédentes,
dans lequel la longueur de l'élément de renforcement (22) est supérieure de 1 % à 10 % à l'écartement des tôles latérales (14).

7. Ensemble de mât (10) selon l'une des revendications précédentes,
**caractérisé en ce qu'**il comprend en outre au moins une cloison (24) s'étendant à l'intérieur du profil de caisson du mât, sensiblement perpendiculairement aux tôles de ceinture (12, 16) et aux tôles latérales (14).

8. Procédé de fabrication d'un ensemble de mât (10) selon l'une des revendications précédentes, comprenant les étapes consistant à :
a) agrafage de la tôle de ceinture arrière (16) et des deux tôles latérales (14) ;
b) mise en place et puis agrafage de la tôle de ceinture avant (12), des éléments d'interface (18) et des éléments de renforcement (22) ;
c) soudage des coutures agrafées.

9. Procédé selon la revendication 8, comprenant en outre l'étape suivante :
d) soudage d'au moins une tôle de cloison (24), ce soudage étant réalisé entre les étapes a) et b).

10. Procédé selon la revendication 8 ou 9, dans lequel l'étape c) et, le cas échéant, l'étape d) sont réalisées au moyen d'un robot de soudage.
